# EUROPÄISCHE PATENTANMELDUNG

(11) **EP 4 289 524 A1**
(43) Veröffentlichungstag der Anmeldung: **13.12.2023**
(21) Anmeldenummer: 23173852.7
(22) Anmeldetag: 17.05.2023
(51) Int. Cl.: B21D 22/02, B21D 28/26, B21D 35/00, B21D 43/05, B21D 43/06, B21D 43/11, H01M 8/0206

(54) **GREIFEINRICHTUNG ZUM GREIFEN BEI DER HERSTELLUNG EINER BIPOLARPLATTE**

(30) Priorität: 09.06.2022 DE 102022114502
(71) Anmelder: Schaeffler Technologies AG & Co. KG, 91074 Herzogenaurach (DE)
(72) Erfinder: Hoferer, Patrick, 77704 Oberkirch (DE); Rosenfelder, Frank, 77855 Achern-Gamshurst (DE); Schwenk, Wilfried, 77855 Achern-Mösbach (DE); Schlosser, Michael, 76467 Bietigheim (DE)

(57) **Zusammenfassung**

Es wird eine Greifeinrichtung (10) zum Greifen wenigstens eines Blechs (42) , das eine Dicke (44) unterhalb von 1 mm, vorzugsweise 0,5 mm, 0,25 mm oder 0,1 mm, und wenigstens zwei Bohrungen (46) aufweist, in einer Werkzeugvorrichtung (50) zur getakteten Herstellung einer Bipolarplatte (40) aus dem Blech (42) entlang einer Herstellungsrichtung (X), vorgeschlagen, wobei wenigstens zwei quer zur Herstellungsrichtung (X) gegenüberliegende Eingriffspins (14) vorgesehen sind, wobei die Eingriffspins (14) zum formschlüssigen Eingreifen entlang jeweils einer insbesondere, zumindest näherungsweise, normal zum Blech (42) verlaufenden Eingriffsachse (E) bzw. Bewegungsbahn eines Eingriffspins (14) in das Blech (42) an den wenigstens zwei Bohrungen (46) vorgesehen sind, und wobei wenigstens einer der Eingriffspins (14) einen zur Eingriffsachse (E) konisch verlaufenden Außenflächenabschnitt (18) zur Zentrierung des Blechs (42) beim Eingreifen aufweist.

## Beschreibung

Die vorliegende Erfindung betrifft eine Greifeinrichtung. Die Greifeinrichtung ist insbesondere ausgebildet zum Greifen wenigstens eines Blechs mit einer Dicke unterhalb von 1 mm oder weniger in einer Werkzeugvorrichtung zur insbesondere getakteten Herstellung einer Bipolarplatte aus dem Blech entlang einer Herstellungsrichtung.

Bei der Herstellung einer Bipolarplatte mittels einer Werkzeugvorrichtung wird typischerweise ein Blech ausgestanzt bzw. verformt, um Kanäle zwischen mehreren Bipolarplatten in einer Brennstoffzelle zu realisieren. Meist besteht das Blech aus hochfestem Edelstahl. Das Blech kann in lose ein Stanzwerkzeug eingelegt werden, wobei es jedoch dazu kommt, dass nicht gestanzte Bereiche zum Stanzwerkzeug hin "nachfließen. Das Blech sollte daher abseits vom Stanzwerkzeug bzw. dem jeweiligen Umformwerkzeug festgehalten werden. Da die Bleche meist eine Dicke unterhalb von 1 mm aufweisen, ist es besonders herausfordernd, beim Ausstanzen und/oder Verformen des Blechs hohe Maßhaltigkeit zu wahren, da beim Stanzen und Verformen das meist hochfeste Blech nur unter großem Aufwand an jeder nicht gestanzten und nicht verformten Stelle in Position zu halten ist. Außerdem müssen die Bleche bei der Herstellung nicht nur in ein Werkzeug eingelegt werden, sondern auch aus dem Werkzeug herausgenommen werden und/oder zu einem weiteren Werkzeug transportiert werden.

Vor diesem Hintergrund werden regelmäßig Greifeinrichtungen verwendet, die ein Blech greifen können. Hier können Probleme auftreten, weil die durch ihre geringe Dicken sehr labilen und leicht deformierbaren Bleche nicht prozesssicher mit den bekannten Greifeinrichtungen transportierbar sind, insbesondere wenn große Hubzahlen eines Stanzwerkzeugs von >20 Hüben pro Minute gewählt sind. Ein Blech kann durchhängen und kann mit dem Werkzeug kollidieren, seine Position verlieren und nicht mehr exakt positioniert werden. Daher sind die Herstellungsprozesse der Bipolarplatten mit den bekannten Greifeinrichtungen nur sehr langsam durchführbar.

Aufgabe der Erfindung ist es daher, eine Greifeinrichtung, eine Werkzeugvorrichtung mit einer Greifeinrichtung und ein Verfahren mit einer Greifeinrichtung anzugeben, mit der die Maßhaltigkeit bei der Serienfertigung von Bipolarplatten und die Herstellungsgeschwindigkeit bzw. die Hubzahlen erhöht werden können.

Die Lösung der Aufgabe erfolgt durch eine Greifeinrichtung nach Anspruch 1, durch eine Werkzeugvorrichtung nach Anspruch 8 und durch ein Verfahren nach Anspruch 9. Bevorzugte Ausgestaltungen der Erfindung sind in den Unteransprüchen und der Beschreibung angegeben, die jeweils einzeln oder in Kombination einen Aspekt der Erfindung darstellen können.

Es wird eine Greifeinrichtung zum Greifen wenigstens eines Blechs in einer Werkzeugvorrichtung zur getakteten Herstellung einer Bipolarplatte aus dem Blech entlang einer Herstellungsrichtung vorgeschlagen. Es ist vorgesehen, dass das Blech eine Dicke unterhalb von 1 mm, vorzugsweise 0,5 mm, 0,25 mm oder 0,1 mm, und wenigstens zwei Bohrungen aufweist, dass wenigstens zwei quer zur Herstellungsrichtung gegenüberliegende Eingriffspins vorgesehen sind, dass die Eingriffspins zum formschlüssigen Eingreifen entlang jeweils einer insbesondere, zumindest näherungsweise, normal zum Blech verlaufenden Eingriffsachse bzw. Bewegungsbahn eines Eingriffspins in das Blech an den wenigstens zwei Bohrungen vorgesehen sind, und dass wenigstens einer der Eingriffspins einen zur Eingriffsachse konisch verlaufenden Außenflächenabschnitt zur Zentrierung des Blechs beim Eingreifen aufweist.

Die Herstellungsrichtung verläuft bevorzugt linear bzw. geradlinig, kann aber auch im Sinne einer Bahnkurve nur abschnittsweise linear und/oder gekrümmt verlaufen. Das Blech kann ursprünglich aufgewickelt sein, das in der Werkzeugvorrichtung abgetrennt wird. Die wenigstens zwei Bohrungen können auch von der Werkzeugvorrichtung eingebracht werden. Die Eingriffspins liegen in etwa unter einem Abstand, der der Breite des Blechs entspricht, gegenüber. Insbesondere können vier oder mehr der Eingriffspins zum Greifen eines einzelnen Blechs vorgesehen sind. Die Eingriffspins korrespondieren zu den Bohrungen, können also darin eingreifen und sind wenigstens abschnittsweise entsprechend kleiner als die Bohrungen. Ein Formschluss beim Eingreifen wirkt entsprechend wenigstens in Breiten- und Längenrichtung des. Blechs, bzw. quer zur Eingriffsachse. Die Eingriffsachse bzw. Bahnkurve ist zumindest im Wesentlichen, näherungsweise und/oder abschnittsweise normal zum Blech orientiert. Die Eingriffsachse entspricht insbesondere einer linearen Bewegungsbahn der Eingriffspins bzw. von Greifmechanismen mit dem Eingriffspins, die zum Greifen verfolgt wird; die Bewegungsbahn kann aber auch nur abschnittsweise linear und/oder gekrümmt verlaufen.

Insbesondere sind die Eingriffsachsen bzw. Bewegungsbahnen beim Eingreifen zumindest im Wesentlichen normal zum Blech und/oder parallel bzw. korrespondierend zueinander orientiert. Zumindest ein Eingriffspin ist abschnittsweise konisch geformt, also insbesondere bereichsweise um die Eingriffsachse bzw. Bahnkurve herum, insbesondere jedoch um seine Mittelachse herum (soweit diese Mittelachse von der Eingriffsachse bzw. Bahnkurve abweicht) um an der durch den Konus gebildeten Außenfläche das Blech beim Eingreifen zu berühren. Der Eingriffspin weist dadurch im Querschnitt durch die Eingriffsachse im Verlauf entlang der Eingriffsachse eine kontinuierlich zunehmende bzw. abnehmende Querschnittsfläche auf, die so beim Eingreifen in eine Bohrung zunehmend zentriert, weil der Außenflächenabschnitt sich der Bohrung wenigstens abschnittsweise nähert. Insbesondere wird so das Blech bei entsprechender Beabstandung der Eingriffspins und der Bohrungen zwischen den Eingriffspins nicht nur positioniert, sondern auch vorteilhaft vorgespannt.

Aus der Erfindung resultiert insbesondere vor diesem Hintergrund vorteilhaft, dass Bipolarplatten noch maßhaltiger hergestellt werden können. Denn das Nachfließen von Blechmaterial beim Stanzen und/oder Umformen in der Werkzeugvorrichtung wird dank des konisch verlaufenden Außenflächenabschnitts deutlich reduziert. Insbesondere kann der konisch verlaufende Außenflächenabschnitt sich auf individuelle, auch kleinste Abweichungen von Abständen zwischen den Bohrungen anpassen. Der Eingriffspin, insbesondere der konisch verlaufende Außenflächenabschnitt, sorgt nicht nur für ein Zentrieren des Blechs, sondern auch für eine Vorspannung des Blechs zwischen gegenüberliegenden Eingriffspins. Insbesondere wird durch die Konizität eine stets ausreichend hohe Vorspannung im Blech zwischen den Eingriffspins ermöglicht. Weiter vorteilhaft ist, dass ein Blech in der Werkzeugvorrichtung nicht nur besser gegriffen bzw. festgehalten, sondern auch noch besser transportiert werden kann, insbesondere von Werkzeug zu Werkzeug der Werkzeugvorrichtung. Dabei müssen die einmal eingreifenden Eingriffspins nicht zwangsläufig an jedem Werkzeug neu eingreifen, sondern können am Einlauf Eingreifen, das Blech dauerhaft greifen, zwischenzeitlich transportieren, und am Auslauf loslassen. Das spart Zeit und erhöht die Genauigkeit.

Die Eingriffspins, insbesondere die wenigstens zwei gegenüberliegenden Eingriffspins, sind zumindest näherungsweise zueinander konstant beabstandet bzw. unverschieblich gehalten. Anders gesagt sind die Eingriffsachsen konstant beabstandet bzw. unverschieblich zueinander (also in Herstellungsrichtung und/oder quer zur Herstellungsrichtung). Denkbar ist es aber auch, dass die Eingriffspins zum weiteren Vorspannen bzw. auch zum Entspannen des Blechs quer zur Eingriffsachse bewegt werden können, insbesondere motorisch bzw. hydraulisch, pneumatisch oder dergleichen.

Wenn der konisch verlaufende Außenflächenabschnitt abgewandt vom gegenüberliegenden Eingriffspin angeordnet ist, wird eine Vorspannung sehr gut gerichtet im Blech zwischen den gegenüberliegenden Eingriffspins ermöglicht. Aber auch die Zentrierung des Blechs gelingt so in der Regel gut. Insbesondere wenn der Außenflächenabschnitt nicht auf der dem gegenüberliegenden Eingriffspin zugewandten Seite liegt bzw. wenn dort kein Außenflächenabschnitt liegt, wird das Zentrieren und das Vorspannen gleichermaßen derart verbessert, dass die Bipolarplatten maßhaltiger und unter weniger Ausschussproduktion hergestellt werden können.

Insbesondere wenn wenigstens zwei gegenüberliegende Eingriffspins jeweils einen konisch verlaufenden Außenflächenabschnitt aufweisen, wird zwischen den Eingriffspins symmetrisch zentriert und vorgespannt, um die Herstellung weiter verbessern zu können. Auch diese Außenflächenabschnitte können bzw. sollten für noch bessere Maßhaltigkeit der Bipolarplatten voneinander abgewandt sein.

Es kann eine Abflachung zumindest im Wesentlichen parallel zur Eingriffsachse an wenigstens einem Eingriffspin der Eingriffspins vorgesehen sein. Es kann auch an den wenigstens zwei. Gegenüberliegenden Eingriffspins insbesondere auf einander zugewandten Seiten der wenigstens zwei Eingriffspins eine bzw. die Abflachung vorgesehen sein. Die Abflachung kann eine Abfräsung sein. Die Abflachung kann den Abstand zwischen den gegenüberliegenden Eingriffspins vergrößern. So bleibt mehr Platz für das Blech und die Werkzeugvorrichtung. Die Abflachung ermöglicht aber auch, dass ein Zentrieren und/oder Vorspannen des Blechs in eine falsche Richtung hervorgerufen wird. Denn das Vorspannen des Blechs soll im Grunde in einer Zugspannung - und keiner Druckspannung - zwischen Eingriffspins vorliegen.

Wenn zwei oder mehr der zwei gegenüberliegenden Eingriffspins in einer Ebene, insbesondere mit verstellbarem und/oder gleichem Abstand entlang der Herstellungsrichtung zueinander, angeordnet sind, kann die Greifeinrichtung beispielsweise flexibel auf verschiedene Anwendungsfälle angepasst werden. Die Eingriffspins können in der Ebene sozusagen ein oder mehrere Vierecke bzw. Rechtecke aufspannen. So kann das Blech ferner gleichmäßig an zwei, vier oder mehr Stellen in einer Ebene gegriffen werden und möglichst exakt in dieser Ebene vorgespannt werden. Auch andere Abstände zwischen den Bohrungen sind so bedienbar.

Insbesondere ist wenigstens ein bzw. der Greifmechanismus vorgesehen, der einen der Eingriffspins auf einem Eingriffspin-Halter und auf der Eingriffsachse gegenüberliegend zu diesem Eingriffspin einen Gegenhalter für den Eingriffspin aufweist. Der Greifmechanismus ist mit dem Eingriffspin beispielsweise im unteren Teil und dem Gegenhalter beispielsweise im oberen Teil - oder umgekehrt - als eine Art Zange für eine einzelne Bohrung ausgebildet. Der Eingriffspin kann als Vorsprung auf dem Eingriffspin-Halter angeordnet sein, insbesondere monolithisch mit dem Eingriffspin-Halter ausgebildet sein bzw. stoffschlüssig daran angeordnet sein. Der Gegenhalter kann eine entsprechende Kavität zum Eintauchen des Eingriffspins aufweisen. Grundsätzlich können der Eingriffspin-Halter und der Gegenhalter zumindest bereichsweise flächig aneinander anliegen, insbesondere um den Eingriffspin und/oder die Kavität herum. Der Eingriffspin-Halter und der Gegenhalter können ebenfalls die Abflachung aufweisen. Wenn solche Greifmechanismen an mehreren oder jedem der Eingriffspins vorgesehen sind, kann das Blech rasch gegriffen und losgelassen werden.

Vorzugsweise sind/ist der Gegenhalter und/oder der Eingriffspin bzw. der Eingriffspin-Halter auf der Eingriffsachse, insbesondere gegensinnig, verstellbar. Insofern kann der Greifmechanismus den Gegenhalter und den Eingriffspin zeitgleich und mit gleicher Geschwindigkeit aufeinander zu bzw. voneinander wegbewegen. Es ist aber auch möglich, dass beispielsweise nur der Gegenhalter oder nur der Eingriffspin verstellbar bzw. beweglich ist. Ergänzend oder alternativ kann der Greifmechanismus pneumatisch, hydraulisch und/oder elektromechanisch verstellbar sein. Das ermöglicht eine automatisierte Betätigung und ein hochpräzises, wiederholgenaues Greifen der Greifeinrichtung.

Insbesondere an dem Eingriffspin-Halter kann der Eingriffspin eine Höhe im Bereich von 2 bis 10 mm aufweisen. Insbesondere ist der Bereich der Höhe von 3 bis 8 mm besonders vorteilhaft. Die Höhe betrifft insbesondere den Teil des Eingriffspins, der in eine Bohrung eingesetzt werden kann bzw. die Bohrung (zumindest näherungsweise) durchragt. Die Höhe beginnt also regelmäßig an einer ebenen bzw. quer zum Eingriffspin bzw. der Eingriffsachse ausgerichteten Ebene, auf der das Blech aufliegen kann. So kann rasch eingegriffen werden.

Der Eingriffspin kann insbesondere im Bereich des Außenflächenabschnitts bzw. im Übergang vom Außenflächenabschnitt zur Oberseite des Eingriffspins eine Materialrücknahme wie eine Fase oder eine Verrundung aufweisen, um besser eingreifen zu können.

Besonders vorteilhaft ist es, wenn der Außenflächenabschnitt einen Winkel bzw. Konuswinkel, beispielsweise relativ zur Eingriffsachse, zur Abflachung und/oder zu einer Normalen in Bezug auf die gewünschte Ebene, in der das gegriffene Blech liegen soll, oberhalb von 1° und unterhalb von 15° aufweist. Als besonders vorteilhaft zum Zentrieren hat sich ein Winkel im Bereich von 2° bis 10°, bevorzugt im Bereich von 3° bis 7°, und besonders bevorzugt von 5°+/-1 ° herausgestellt. So kann auf einem kurzen Weg zentriert und es kann eine genügend große Vorspannung auf das Blech aufgebaut werden.

Die Aufgabe wird ferner gelöst durch eine Werkzeugvorrichtung zur getakteten Herstellung einer Bipolarplatte entlang einer Herstellungsrichtung, aufweisend eine Greifeinrichtung zum Greifen wenigstens eines Blechs zur Herstellung der Bipolarplatte, wobei die Werkzeugvorrichtung zum Stanzen des Blechs insbesondere in mehreren Stanzstufen ausgebildet ist, und wobei die Greifeinrichtung das Blech insbesondere zwischen den Stanzstufen entlang der Herstellungsrichtung greift und/oder transportiert. Insbesondere ist die Greifeinrichtung wenigstens teilweise wie vorbeschrieben ausgebildet. Mit der Werkzeugvorrichtung können entsprechend maßhaltige Bipolarplatten hergestellt werden, weil die Greifeinrichtung sich besonders für einen getakteten Herstellungsprozess wie den Stanzprozess eignet.

Die Aufgabe wird ferner gelöst durch ein Verfahren zum Greifen wenigstens eines Blechs in einer Werkzeugvorrichtung zur getakteten Herstellung der Bipolarplatte aus dem Blech entlang einer Herstellungsrichtung mittels einer Greifeinrichtung. Eine von der Greifeinrichtung oder der Werkzeugvorrichtung ist vorschlagsgemäß wie vorbeschrieben ausgebildet. Weiter weist das Verfahren vorschlagsgemäß auf ein Bereitstellen des Blechs, aufweisend ein Blech mit wenigstens zwei Bohrungen; und ein Greifen des Blechs an den wenigstens zwei Bohrungen mittels gegenüberliegender Eingriffspins durch Bewegen der Eingriffspins durch die Bohrungen jeweils entlang einer Eingriffsachse normal und relativ zum Blech, wobei bei dem Bewegen der Eingriffspins ein konisch verlaufender Außenflächenabschnitt eines Eingriffspins und der gegenüberliegende Eingriffspin jeweils in der Bohrung das Blech berühren, und wobei das Blech über den konisch verlaufenden Außenflächenabschnitt bis zum Ende des Bewegens der Eingriffspins relativ zum Blech zunehmend vorgespannt wird. Das vorbeschriebene Verfahren ist durch die entsprechenden Merkmale und Vorteile der Greifeinrichtung bzw. Werkzeugvorrichtung vorteilhaft ergänzbar.

Insbesondere wenn das Verfahren mit einem Greifmechanismus durchgeführt wird, wobei der Greifmechanismus einen der Eingriffspins und auf der Eingriffsachse gegenüberliegend zu diesem Eingriffspin einen Gegenhalter für den Eingriffspin aufweist, und wobei der Greifmechanismus das Greifen an den Bohrungen durchführt, kann ein rasches Zentrieren und Vorspannen des Blechs bewirkt werden. Insbesondere ist dann je Eingriffspin ein Greifmechanismus vorgesehen, d.h. zwei Greifmechanismen für gegenüberliegende zwei Eingriffspins. Das Bewegen der Eingriffspins relativ zum Blech kann dann entweder über jeweils einen Eingriffspin-Halter mit dem Eingriffspin oder aber über den das Blech verschiebenden Gegenhalter geschehen. Möglich ist auch, dass Eingriffspin-Halter und Gegenhalter aufeinander zu bewegt werden, wobei dann das Blech dazwischen am Eingriffspin zentriert wird, insbesondere geschieht das Zentrieren während oder noch bevor der Eingriffspin in eine Kavität am Gegenhalter taucht. Schließlich kann das Blech im Bereich jeder Bohrung an einem Greifmechanismus zentriert festgehalten sein und insofern zwischen den Greifmechanismen vorgespannt vorliegen.

Im Rahmen der vorbeschriebenen und nachfolgenden Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets mit "und/oder" ersetzt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig.1:: eine Greifeinrichtung in einer perspektivischen Ansicht,
- Fig.2:: ein vergrößertes Detail der Fig. 1, und
- Fig.3:: ein weiteres Detail der Greifeinrichtung in einer Schnittansicht.

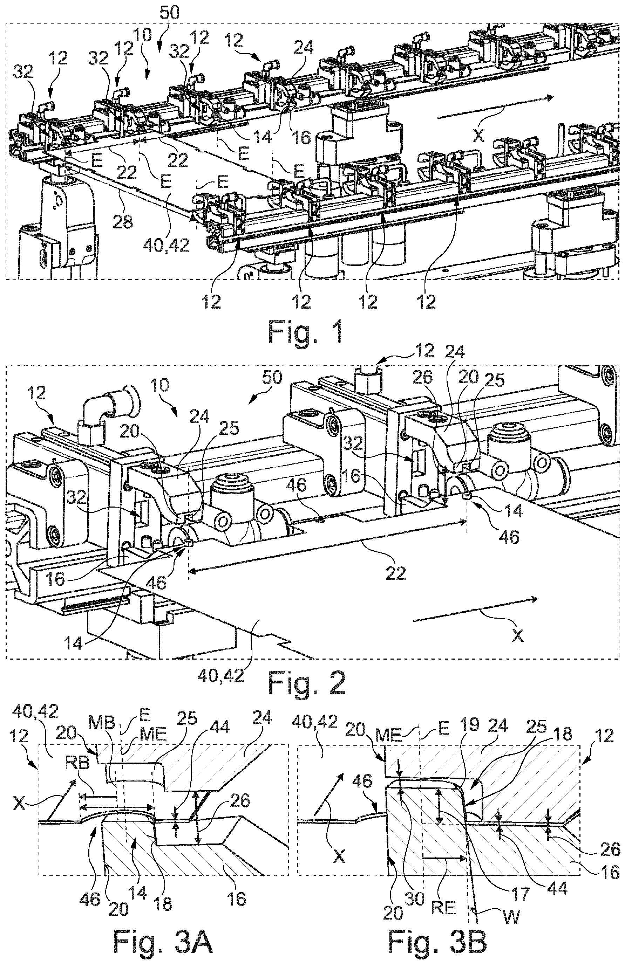

Fig. 1 zeigt eine Werkzeugvorrichtung 50, ausgebildet ist zur getakteten Herstellung einer aus einem Blech 42 herzustellenden Bipolarplatte 40 entlang einer Herstellungsrichtung X. Die Werkzeugvorrichtung 50 ist zum Stanzen des Blechs 42 in mehreren Stanzstufen ausgebildet, so dass die Bipolarplatte 40 entsteht. Eine Greifeinrichtung 10 kann das Blech 42 zwischen den Stanzstufen entlang der Herstellungsrichtung X greifen und transportieren. Das Blech 42 weist eine Dicke 44 von ca. 0,4 mm und ferner vier Bohrungen 46 auf, wie sich insbesondere aus dem in Fig. 2 dargestellten Detail der Fig. 1 ergibt.

Die Greifeinrichtung 10 der Fig. 1 weist Vielzahl von paarweise gegenüberliegenden Greifmechanismen 12 aufweist. Die Greifeinrichtung 10 ist zum parallelen Greifen von mehreren Blechen 42 ausgebildet, wobei nur das eine Blech 42 dargestellt ist, und wobei eine Vielzahl von nicht dargestellten Blechen 42 gleichzeitig gegriffen werden kann, um den taktweisen Herstellungsprozess entlang der Herstellungsrichtung X parallel bedienen zu können.

Vier der Greifmechanismen 12 greifen vorliegend jeweils über einen Eingriffspin 14, der auf einem Eingriffspin-Halter 16 monolithisch mit diesem angeordnet ist, in die Bohrungen 46 ein. Jeweils zwei Eingriffspins 14 liegen quer zur Herstellungsrichtung X gegenüber und greifen formschlüssig entlang jeweils einer Eingriffsachse E in das Blech 42 ein, wie sich in den Fig. 2 und 3B insbesondere zeigt. Die Eingriffsachsen E sind normal zum Blech 42 und parallel zueinander orientiert. Die Eingriffsachsen E fallen mit Mittelachsen ME der Eingriffspins 14 zusammen, auf die später noch näher eingegangen werden wird.

Alle Eingriffspins 14 weisen jeweils einen zur Eingriffsachse E konisch verlaufenden Außenflächenabschnitt 18 auf, der zur Zentrierung des Blechs 42 beim Eingreifen dient; dies ist am besten in Fig. 3A ersichtlich, die im Grunde eine gedrehte perspektivische Ansicht der Fig. 1 und 2 zeigt, die ferner inmitten der Eingriffsachse E und quer zur Herstellungsrichtung X geschnitten worden ist.

Der Außenflächenabschnitt 18 eines jeden Eingriffspins 14 ist jeweils abgewandt vom gegenüberliegenden Eingriffspin 14 angeordnet, wie ebenfalls Fig. 3A zeigt. Dabei weisen die Eingriffspins 14 ferner jeweils eine Abflachung 20 parallel zur Eingriffsachse E auf, wobei die Abflachungen 20 gegenüberliegender zwei Eingriffspins 14 auf einander zugewandten Seiten der Eingriffspins 14 angeordnet sind. Die Abflachungen 20 sind insofern jeweils abgewandt vom Außenflächenabschnitt 18 ihres Eingriffspins 14 angeordnet. Der Eingriffspin-Halter 16 und der Gegenhalter 24 weist jeweils ebenfalls eine Abflachung 20 auf. Die Abflachungen 20 sind beispielsweise abgefräst bzw. plangefräst und hierdurch hergestellt aus einem vormals größeren Bauteil. Insbesondere liegen die Abflachungen 20 eines einzelnen Greifmechanismus 12, wie vorliegend, zumindest näherungsweise in einer Ebene.

Die Eingriffspins 14 sind im Grunde in einer Ebene angeordnet bzw. spannen diese Ebene auf und weisen einen verstellbaren, und vorliegend gleichen Abstand 22 entlang der Herstellungsrichtung X zueinander auf. "Im Grunde in einer Ebene" deswegen, weil die Greifermechanismen 12 vorliegend ferner dazu ausgebildet sind, auch die Eingriffspin-Halter 16 bzw. Eingriffspins 14 über eine Länge, die im Wesentlichen zum kollisionsfreien Einsetzen und Herausnehmen eines Blechs 42 aus dem Greifermechanismus 12 gewählt ist, vertikal bzw. entlang der Eingriffsachse E zu bewegen. Deshalb liegen die Eingriffspins 14 nicht immer wortsinngemäß, aber dennoch "im Grunde", in einer Ebene.

Die gegenüberliegenden Eingriffspins 14, insbesondere die Eingriffsachsen E, sind um den Abstand 28 quer zur Herstellungsrichtung X voneinander beabstandet. Der Abstand 28 entspricht zumindest im Wesentlichen einer Breite des Blechs 42. Der Abstand 28 kann auch einstellbar sein, ist aber vorzugsweise konstant.

Der Eingriffspin 14 auf seinem Eingriffspin-Halter 16 ist korrespondierend zu einem Gegenhalter 24 ausgebildet, vgl. Fig. 3A. Das ist vorliegend dadurch realisiert, dass der Gegenhalter 24 eine Kavität 25 aufweist, in die der Eingriffspin 14 eintauchen kann. Bei in die Kavität 25 eingetauchtem Eingriffspin 14 herrscht ein allseitiger Abstand vom Eingriffspin 14 zur Fläche in der Kavität 25, um Kollisionen und Verspannungen zu vermeiden; insofern ist der Eingriffspin 14 flacher als die Kavität 25 tief ist bzw. weist ein kleineres Volumen als die Kavität 25 auf; dieses Detail ist in Fig. 3B dargestellt. Daraus ergibt sich insbesondere, dass z.B. bei gegriffenem Blech 42, wonach der Eingriffspin-Halter 16 vom Gegenhalter 24 mit dem Dicke 44 entsprechenden Abstand 26 beabstandet ist, der noch größere Abstand 30 zwischen Eingriffspin 14 und Kavität 25 entlang der Eingriffsachse E vorliegt. Anders gesagt stellt die Kavität 25 genügend Freiraum für den Eingriffspin 14 zur Verfügung, wobei der Gegenhalter 24 selbst in erster Linie zum Einklemmen des Blechs 42 mit dem Eingriffspin-Halter 16 vorgesehen ist, und wobei der Eingriffspin 14 zum Zentrieren des Blechs 24 vorgesehen ist.

In Fig. 3A ist im Detail ein Zustand dargestellt, in dem der Greifmechanismus 12 geöffnet ist, wie es auch schon in Fig. 1 und 2 der Fall ist. Der Gegenhalter 24 ist vom Eingriffspin-Halter 16 um den Abstand 26 beabstandet. Das zwischengeordnete Blech 42 ist bereit, gegriffen zu werden, weil die Bohrung 36 zwischen Eingriffspin 14 und Kavität 25 angeordnet ist.

In Fig. 3B ist abweichend von Fig. 3A ein Zustand dargestellt, in dem der Greifmechanismus 12 geschlossen ist, in dem das Blech 42 am konisch verlaufenden Außenflächenabschnitt 18 anliegt und in dem das Blech 42 zwischen Eingriffspin-Halter 16 und Gegenhalter 24 eingeklemmt ist. Es liegt nun der im Vergleich zur Fig. 3A viel kleinere Abstand 26 vor, der der Dicke 44 des Blechs 42 entspricht. Dabei herrscht ausgehend von der Kontaktstelle des Blechs 42 mit dem Außenflächenabschnitt 18 eine Zugspannung im Blech 42 wenigstens bis hin zum gegenüberliegenden Greifmechanismus 12 bzw. Eingriffspin 14. Ausgehend von Fig. 3A wurde das Blech 42 an den vier Bohrungen 46 mittels der Eingriffspins 24 durch Bewegen der Eingriffspins durch die Bohrungen 46 jeweils entlang der Eingriffsachsen E normal und relativ zum Blech 42 gegriffen. Dabei kam es bei dem Bewegen der Eingriffspins 24 dazu, dass der Außenflächenabschnitt 18 jeweils in der Bohrung 46 das Blech 42 berührte, und dazu, dass das Blech 42 über den Außenflächenabschnitt 18 bis zum Ende des Bewegens der Eingriffspins 14 (wie in Fig. 3B ersichtlich) relativ zum Blech 42 zunehmend vorgespannt wurde.

Der Gegenhalter 24 und der Eingriffspin 14 sind mittels des vorliegenden Greifmechanismus 2 auf der Eingriffsachse E gegensinnig entlang der Eingriffsachse E pneumatisch verstellbar. Hierzu ist eine Führung 32 vorgesehen, die pneumatisch angesteuert ist und so den Eingriffspin-Halter 16 und den Gegenhalter 24 mit jeweils zumindest näherungsweiser gleicher Geschwindigkeit (je nach Pneumatik-Parametern) und/oder gleicher Wegstrecke (ca. die Hälfte des ursprünglichen Abstands 26) aufeinander zu und voneinander wegbewegen kann. Die Führung 32 ist zum Durchführen einer linearen Bewegung von Eingriffspin-Halter 16 bzw. Gegenhalter 24 ausgebildet. Die Führung 32 kann jedoch auch dazu ausgebildet sein, eine nichtlineare Bewegung durchzuführen, beispielsweise um eine bzw. die Bewegungsbahn abzubilden. Beispielsweise kann die Führung 32 einen Exzenter und/oder einen Roboterarm oder dergleichen aufweisen.

Am Eingriffspin-Halter 16 hat der Eingriffspin 14 eine Höhe 17 von 5 mm. Andere Höhen sind auch denkbar, beispielsweise 3 mm, 4 mm, 6 mm, 7 mm bis zu 20 mm. Die Höhe 17 ragt zumindest nahezu vollständig durch die Bohrung 46 durch, wenn das Blech 42 wie beispielsweise in Figur 3B auf dem Eingriffspin-Halter 16 aufliegt.

Der Eingriffspin 14 weist im Bereich des Außenflächenabschnitts 18 bzw. im Übergang vom Außenflächenabschnitt 18 zur Oberseite des Eingriffspins 14 eine Materialrücknahme 19 in Form einer Verrundung auf, was das Eingreifen in die Bohrung 46 erleichtert.

Der Außenflächenabschnitt 18 verläuft unter einem Winkel W bzw. Konuswinkel, hier relativ zur Eingriffsachse E, zu den Abflachungen 20 und zu einer Normalen in Bezug die Ebene, in der das gegriffene liegt soll, von 5° bzw. 5°+/-1°. Gerade mit diesem Winkel kann auf einem kurzen Weg zentriert und es kann eine genügend große Vorspannung auf das Blech aufgebaut werden.

Insbesondere, aber auch vorliegend, bildet die Eingriffsachse E auch eine Mittelachse ME des Eingriffspins 14, wobei die Mittelachse ME von dem konisch verlaufenden Außenflächenabschnitt 18 umlaufend gleichbeabstandet umgeben sein sollte bzw. ist.

In anderen denkbaren Ausführungsformen könnte auch die Eingriffsachse E von der Mittelachse ME abweichend positioniert sein; beispielsweise, wenn die Eingriffsachse E eine Bewegungsbahn ist, die nicht vollständig zur Form des Eingriffspins 14 korrespondiert und/oder wenigstens abschnittsweise nichtlinear bzw. gekrümmt verläuft.

Vorzugsweise - ebenfalls wie vorliegend - weist der Eingriffspin 14 um die Eingriffsachse E bzw. Mittelachse ME angrenzend an den Eingriffspin-Halter 16, sozusagen an der dicksten Stelle des Eingriffspins 14, einen Radius RE auf, der z.B. bis zu 50 % kleiner als der Radius RB der Bohrung 46 sein sollte. Der Radius RE kann aber auch dem Radius RB entsprechen. Beispielsweise ist ein Radius RE von 3 bis 6 mm vorgesehen, wenn der Radius RB der Bohrung 46 etwa 4 bis 8 mm beträgt.

Wie insbesondere in Fig. 3A ersichtlich ist, aber wie es im Allgemeinen auch sinnvoll ist, insbesondere wenn der Eingriffspin 14 wie vorliegend kleiner als die Bohrung 46 ist, verlaufen eine Mittelachse MB der Bohrung 46 und die Eingriffsachse E bzw. Mittelachse ME parallel und beabstandet voneinander. Insbesondere kann der Eingriffspin 14 außermittig in die Bohrung 46 eingreifen. So kann der Außenflächenabschnitt 18 beispielsweise schon an seinem höchsten Punkt entlang der Eingriffsachse E bzw. Mittelachse ME in Kontakt mit der Bohrung 46 kommen.

### Bezugszeichenliste

- 10: Greifeinrichtung
- 12: Greifmechanismus
- 14: Eingriffspin
- 16: Eingriffspin-Halter
- 17: Höhe des Eingriffspins
- 18: Außenflächenabschnitt
- 19: Materialrücknahme
- 20: Abflachung
- 22: Abstand der Eingriffspins entlang der Herstellungsrichtung
- 24: Gegenhalter
- 25: Kavität
- 26: Abstand von Gegenhalter und Eingriffspin-Halter
- 28: Abstand der Eingriffspins quer zur Herstellungsrichtung
- 30: Abstand von Gegenhalter und Eingriffspin
- 32: Führung des Greifermechanismus

- 40: Bipolarplatte
- 42: Blech
- 44: Dicke
- 46: Bohrung

- 50: Werkzeugvorrichtung

- E: Eingriffsachse
- MB: Mittelachse Bohrung
- ME: Mittelachse Eingriffspin
- W: Winkel Außenflächenabschnitt
- RB: Radius Bohrung
- RE: Radius Eingriffspin
- X: Herstellungsrichtung

## Patentansprüche

1. Greifeinrichtung (10) zum Greifen wenigstens eines Blechs (42), das eine Dicke (44) unterhalb von 1 mm, vorzugsweise 0,5 mm, 0,25 mm oder 0,1 mm, und wenigstens zwei Bohrungen (46) aufweist, in einer Werkzeugvorrichtung (50) zur getakteten Herstellung einer Bipolarplatte (40) aus dem Blech (42) entlang einer Herstellungsrichtung (X),
- wobei wenigstens zwei quer zur Herstellungsrichtung (X) gegenüberliegende Eingriffspins (14) vorgesehen sind,
- wobei die Eingriffspins (14) zum formschlüssigen Eingreifen entlang jeweils einer insbesondere, zumindest näherungsweise, normal zum Blech (42) verlaufenden Eingriffsachse (E) bzw. Bewegungsbahn eines Eingriffspins (14) in das Blech (42) an den wenigstens zwei Bohrungen (46) vorgesehen sind, und
- wobei wenigstens einer der Eingriffspins (14) einen zur Eingriffsachse (E) konisch verlaufenden Außenflächenabschnitt (18) zur Zentrierung des Blechs (42) beim Eingreifen aufweist.

2. Greifeinrichtung (10) nach Anspruch 1, **dadurch gekennzeichnet, dass** der konisch verlaufende Außenflächenabschnitt (18) abgewandt vom gegenüberliegenden Eingriffspin (14) angeordnet ist.

3. Greifeinrichtung (10) nach Anspruch 1 oder 2, **dadurch gekennzeichnet, dass** die wenigstens zwei gegenüberliegenden Eingriffspins (14) jeweils einen konisch verlaufenden Außenflächenabschnitt (18) aufweisen.

4. Greifeinrichtung (10) nach einem der voranstehenden Ansprüche, **dadurch gekennzeichnet, dass** eine Abflachung (20) zumindest im Wesentlichen parallel zur Eingriffsachse (E) an wenigstens einem Eingriffspin (14) vorgesehen ist, oder an den wenigstens zwei gegenüberliegenden Eingriffspins (14) auf einander zugewandten Seiten der wenigstens zwei gegenüberliegenden Eingriffspins (14) vorgesehen ist.

5. Greifeinrichtung (10) nach einem der voranstehenden Ansprüche, **dadurch gekennzeichnet, dass** zwei oder mehr der zwei gegenüberliegenden Eingriffspins (14) in einer Ebene, insbesondere mit verstellbarem und/oder gleichem Abstand (22) entlang der Herstellungsrichtung (X) zueinander, angeordnet sind.

6. Greifeinrichtung (10) nach einem der voranstehenden Ansprüche, **dadurch gekennzeichnet, dass** wenigstens ein Greifmechanismus (12) vorgesehen ist, der einen der Eingriffspins (14) auf einem Eingriffspin-Halter (16) und auf der Eingriffsachse (E) gegenüberliegend zu diesem Eingriffspin (14) einen Gegenhalter (24) für den Eingriffspin (14) aufweist.

7. Greifeinrichtung (10) nach einem der voranstehenden Ansprüche, **dadurch gekennzeichnet, dass** der Gegenhalter (24) und/oder der Eingriffspin (14) auf der Eingriffsachse (E), insbesondere gegensinnig, verstellbar sind/ist und/oder der Greifmechanismus (12) pneumatisch, hydraulisch und/oder elektromechanisch verstellbar ist.

8. Werkzeugvorrichtung (50) zur getakteten Herstellung einer Bipolarplatte (40) entlang einer Herstellungsrichtung (X), aufweisend eine Greifeinrichtung (10) nach einem der Ansprüche 1 bis 7 zum Greifen wenigstens eines Blechs (42) zur Herstellung der Bipolarplatte (40), wobei die Werkzeugvorrichtung (50) zum Stanzen des Blechs (42) insbesondere in mehreren Stanzstufen ausgebildet ist, und wobei die Greifeinrichtung (10) das Blech (42) insbesondere zwischen den Stanzstufen entlang der Herstellungsrichtung (X) greift und/oder transportiert.

9. Verfahren zum Greifen wenigstens eines Blechs (42) in einer Werkzeugvorrichtung (50) zur getakteten Herstellung einer Bipolarplatte (40) aus dem Blech (42) entlang einer Herstellungsrichtung (X) mittels einer Greifeinrichtung (10), wobei die Greifeinrichtung (10) nach einem der Ansprüche 1 bis 7 oder die Werkzeugvorrichtung (50) nach Anspruch 8 ausgebildet ist, aufweisend die Schritte:
- Bereitstellen des Blechs (42) mit wenigstens zwei Bohrungen (46),
- Greifen des Blechs (42) an den wenigstens zwei Bohrungen (46) mittels gegenüberliegender (14) Eingriffspins durch Bewegen der Eingriffspins (14) durch die Bohrungen (46) jeweils entlang einer Eingriffsachse (E) normal und relativ zum Blech (42), wobei bei dem Bewegen der Eingriffspins (14) ein konisch verlaufender Außenflächenabschnitt (18) eines Eingriffspins (14) und der gegenüberliegende Eingriffspin (14) jeweils in der Bohrung das Blechs (42) berühren, und wobei das Blechs (42) über den konisch verlaufenden Außenflächenabschnitt (18) bis zum Ende des Bewegens der Eingriffspins (14) relativ zum Blechs (42) zunehmend vorgespannt wird.

10. Verfahren nach Anspruch 9, wobei ein Greifmechanismus (12) vorgesehen ist, der einen der Eingriffspins (14) und auf der Eingriffsachse (E) gegenüberliegend zu diesem Eingriffspin (14) einen Gegenhalter (24) für den Eingriffspin (14) aufweist, und wobei der Greifmechanismus (12) das Greifen an den Bohrungen (46) durchführt.
